# EUROPEAN PATENT SPECIFICATION

(11) **EP 1 792 268 B1**
(45) Date of publication and mention of the grant of the patent: **30.01.2019**
(21) Application number: 05781622.5
(22) Date of filing: 08.09.2005
(51) Int. Cl.: G06F 3/033

(54) **APPARATUS FOR ENABLING TO CONTROL AT LEAST ONE MEDIA DATA PROCESSING DEVICE, AND METHOD THEREOF**
VORRICHTUNG ZUR ERMÖGLICHUNG DER STEUERUNG VON MINDESTENS EINER MEDIENDATENVERARBEITUNGSVORRICHTUNG UND VERFAHREN DAFÜR
APPAREIL PERMETTANT DE COMMANDER AU MOINS UN DISPOSITIF DE TRAITEMENT DE DONNEES MULTIMEDIA, ET PROCEDE CONNEXE

(30) Priority: 10.09.2004 EP 04104383
(43) Date of publication of application: 06.06.2007
(73) Proprietor: Koninklijke Philips N.V., 5656 AE Eindhoven (NL)
(72) Inventor: VAN VUGT, Henry, NL-5656 AA Eindhoven (NL)
(74) Representative: de Haan, Poul Erik
(86) International application number: PCT/IB2005/052922
(87) International publication number: WO 2006/027747

(56) References cited:
- WO-A-2005/027362
- JP-A- 8 079 847
- US-A- 6 011 553
- US-A1- 2003 095 156
- US-A1- 2003 107 605
- US-B1- 6 421 069

## Description

The invention relates to a method of enabling to control a plurality of media data processing devices, to an apparatus for performing the method, and a computer program product therefor.

US2003/0107605A1 discloses a graphical user interface for content devices. The interface comprises a content source selection menu including a list of source content devices that are available sources of content, and a destination menu including a list of content devices that may receive content. The interface allows a user to select a particular source or piece of content and a particular destination. In response to selecting a source content device, a content directory menu of available content is provided. The user selects a TV program, a TV channel, etc., from the content directory menu, and then selects a destination for the TV program from the destination menu. The selected source content device is indicated by bold text. "Ok" and "Cancel" buttons are shown in the interface to enable the user to control a content transfer between the source and destination content devices. Then, a particular selected content is routed between the source content device and the destination content device. In addition, a graphical representation of a content stream between the source content device and the destination content device is shown.

The known graphical user interface is cumbersome for the user. The selection of the source content device and the destination content device is not intuitive.

US patent 6,421,069 B1 describes a method and an apparatus for including self-describing information within devices.

JP 08 079847 A relates to an information system, an audio-visual (AV) equipment constituting the system and a remote control, in which the hardware connection among a plurality of AV devices can be conveniently controlled by a user through the use of icons.

US patent 6,011,553 A discloses a data transfer displaying/operating method in which a user can drag a connector graphically attached to a source object to a socket of a destination object, in order to transfer data from the source object to the destination object.

It is an object of the present invention to provide an intuitive and user-friendly control of a plurality of media data processing devices.

This object is realized by independent method claim 1, independent apparatus claim 8, and corresponding "computer-program product" claim 9.

Advantageous embodiments are defined in the dependent claims.

Hereby, first and second items are used to form the operation for controlling a plurality of media data processing devices. The first and second items are associated with source and destination media data processing devices, respectively. The operation is related to a transfer of media content between the source and destination. For instance, the source media data processing device is a media content storage device (e.g., a computer), and the destination media data processing device is a TV display. The media content is streamed from the storage device to the TV display for displaying the media content to a user. In another example, the source media data processing device is an Internet server capable of streaming the media content to the TV display.

The first and second items may be presented on the display as icons. The user may be enabled to move the icons on the display. To enable forming (i.e., a generation of) the operation, the user may select (from the first and second items) the first selected item and the second selected item. The selection may be performed, e.g., using a keyboard, a pointing device (a mouse), a remote control unit, etc. The operation on the basis of the first and second selected items is formed when they are in the predetermined arrangement. The predetermined arrangement means that the first and second items have a predetermined position on the display. When the user moves the icons to the predetermined position, the operation may be formed.

The first and second items are displayed in first and second lists respectively. The lists may be represented as two circles (wheels). Where the wheels touch, a source symbol and a destination symbol may be shown. When the first selected item is positioned (e.g., the first items are user-operably rotated in the first list) and displayed at the source symbol, and the second selected item - at the destination symbol, the first and second selected items form the basis for the generation of the operation between the source and the destination devices.

The present invention provides an intuitive user interface for forming an operation to control a plurality of media data processing devices. The predetermined arrangement of the respective one of the first items and the respective one of the second items provides an easy-to-operate user interface. The predetermined arrangement indicates how the user can change a current arrangement (the position) of the first and second items so that a desired operation (the combination of the first and second selected items) is formed.

The apparatus of claim 8 is arranged to carry out the steps of the method of claim 1 of the present invention.

These and other aspects of the invention will be further explained and described with reference to the following drawings:
Figure 1 is a functional block diagram of an embodiment of an apparatus according to the present invention;
Figure 2 is an embodiment of an apparatus according to the present invention, where an example of data stored in a memory coupled to the apparatus is shown;
Figure 3 is a non-claimed embodiment of a user interface presentation according to the present invention;
Figure 4 is an embodiment of the method of the present invention;
Figure 5 is an embodiment of a user interface presentation according to the present invention, where a TV tuner is selected as a source of media content, and a TV display as a destination of media content;
Figure 6 is an embodiment of a user interface presentation according to the present invention, where a video camera is selected as a source of media content, and a DVD recorder as a destination of media content;
Figure 7 is an embodiment of a user interface presentation according to the present invention, where a photo album is selected from the first list and an "edit" function is selected from the second list to enable an operation with a photo in the photo album;
Figure 8 is an embodiment of a user interface presentation according to the present invention, where a storage means is selected as source of media content, and a TV display as a destination of media content, and a "music" content is sub-selected from the storage means;
Figure 9 is an embodiment of a user interface presentation according to the present invention, where a TV tuner is selected as source of media content and a DVD recorder as a destination of media content, and a particular TV program receivable by the TV tuner is sub-selected using an EPG (Electronic Program Guide) interface;
Figure 10 is a functional block diagram of an embodiment of the present invention, where the selection of the items is user-operably performed using a remote control unit.

According to the present invention, a user can control a plurality of media data processing devices (further referred to as a "media device"), e.g., a media data storage device (e.g., a Hard Disk Drive, and Internet storage server, a versatile flash memory card (e.g., a "Memory Stick" device)), a TV, a video camera, a DVD player, etc. To control one or more devices, the user specifies an operation with media content. The operation may relate to one media device, for example, an editing of an image stored in a photo camera. In another example, the operation relates to two or more media devices, for example, a video-on-demand service for watching on a TV (at a user's site) a particular movie stored at a remote server.

The operation requires a selection of at least two items from at least two sets of items, respectively (one item per set). For instance, the editing of the image stored in the photo camera requires that a photo camera icon is selected among icons of other media devices and the editing option is selected among other possible options such as "Copying to ...", "Streaming to ...", "Deleting", etc.

The media content may comprise at least one of, or any combination of, visual information, audio information, text, and the like. The expression "audio data", or "audio content", is hereinafter used as data pertaining to audio comprising audible tones, silence, speech, music, tranquility, external noise or the like. The expression "video data", or "video content", is used as data which are visible such as a motion picture, "still pictures", characters etc.

The media content may be stored on different data carriers such as, an audio or video tape, an optical storage disk, e.g., a CD-ROM disk (Compact Disk Read Only Memory) or a DVD disk (Digital Versatile Disk), floppy and hard drive discs etc, in any format, e.g. MPEG (Moving Picture Experts Group), MIDI (Musical Instrument Digital Interface), Shockwave, QuickTime, WAV (Waveform Audio), etc.

According to the present invention, an apparatus for enabling to control a plurality of media data processing devices is provided. The apparatus presents to the user all information required for the selection of the operation in an intuitive manner. The apparatus does not present to the user cumbersome menus, multiple dialogues, etc., known in the prior art.

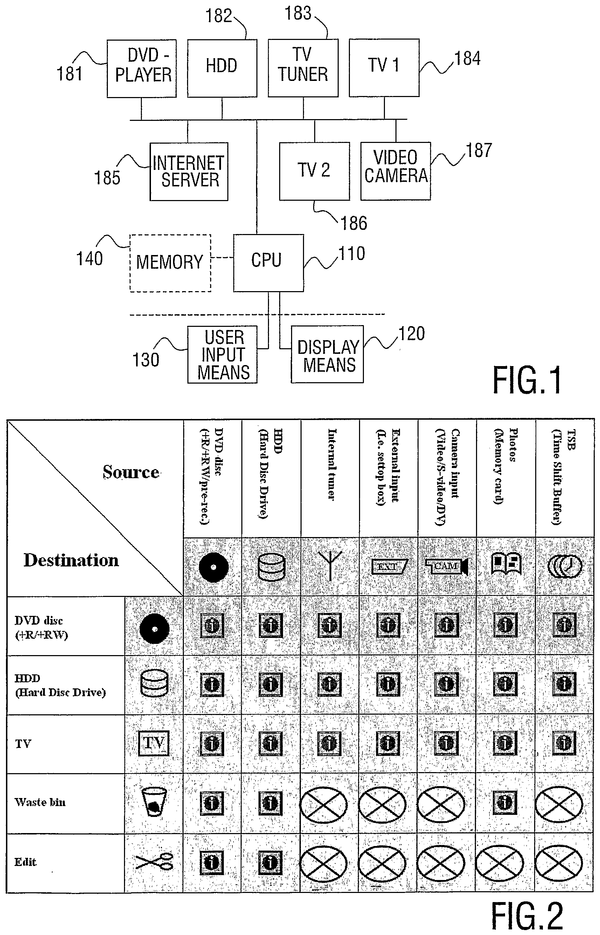

An embodiment of the apparatus according to the present invention is shown in Figure 1. The apparatus comprises a data processor 110 coupled to display means 120, user input means 130 and, optionally, a memory 140.

The display means 120 may be any conventional means for presenting video content to the user, for example, a CRT (cathode ray tube), LCD (Liquid Crystal Diode), LCOS (Liquid Crystal on Silicon) rear-projection technology, DLP (Digital Light Processing) television/Projector, Plasma Screen display device, etc.

The user input means 130 may be a keyboard, e.g., a well-known QWERTY computer keyboard, a pointing device, a TV remote control unit, etc. For example, the pointing devices are available in various forms such as a computer (wireless) mouse, light pen, touchpad, joystick, light-pen, trackball, etc.

The processor 110 may be a well-known central processing unit (CPU) suitably arranged to implement the present invention as explained herein. The memory unit 140, for example, a known RAM (random access memory) memory module, may store first data associated with a first set of items and second data associated with a second set of items. The processor 110 may be configured to read from the memory 140 the first and second data to present the first items and second items on the display means 120.

In an embodiment of the present invention, the first items and second items are associated with first devices and second devices 181-187, respectively. The first and second devices may be arranged to communicate with the processor 110 so that the operation formed on the basis of the respective one of first items and the respective one of the second items can be communicated to the respective one of the first devices and the respective one of the second devices. To communicate with the devices 181-187, the processor 110 may be equipped with a network card for connecting to a data network, e.g., a video on demand connection, the Internet, etc.

In one example, the memory 140 is not required. The processor 110 detects the first and second devices, and automatically presents the first and second items on the basis of the detected first and second devices. For instance, the processor 110 and the media devices 181-187 may interact in accordance with the UPnP (Universal Plug and Play) standard.

In a preferred embodiment, the user input means 130 and the display means 120 are located at the user's site because the user should preferably be in control of the selection of the operation. The user can perform the selection after the first and second items were presented to the user, of course. Therefore, the display means 120 is at the user's site in most cases.

The processor 110 is preferably also at the user's site. However, the processor 110 may be located remotely from the display means 120 and the user input means 130. In that case, the remote processor 110 may remotely communicate with the display means 120 to present the first and second items on the display means 120. Similarly, the processor may remotely communicate with the user input means. Signals between the processor and the display means (and the user input means), or between the processor and the media devices 181-187 may be transmitted via a satellite, terrestrial, cable or other link.

The first and/or second items are presented on the display means 120 so that an arrangement of a respective one of the first items and/or a respective one of the second items is changeable. The changeable arrangement means that, for example, an item can have different positions on the display, an order of the first (second) items in a first (second) list is changeable, an orientation of the first (second items) is changeable, e.g., with respect to other items, etc.

The processor 110 is further configured to present on the display means 120 (or simply "display 120") an indicator for indicating a predetermined arrangement of the respective one of the first items and the respective one of the second items. The predetermined arrangement is an arrangement which is interpreted by the processor that, if an arrangement of one first item and one second item is changed to the predetermined arrangement, the operation on the basis of the corresponding first item and the corresponding second item is to be formed. The selection of the first item and the second item by positioning them in the predetermined arrangement enables to identify the first and second selected items as the basis to form the respective operation.

The user can move the first and second items to the predetermined arrangement by means of the user input means 130. For example, the first and second items are presented as icons on the display 120. The predetermined arrangement is a first particular area on the display for one of the first items, and a second particular area for one of the second items. The user uses the touch screen (not shown) to move one of the first icons to the first area, and one of the second items to the second area. Optionally, the processor is arranged to present the first selected item and/or the second selected item in the predetermined arrangement.

If the apparatus is provided with the memory 140, the memory may be used to store the first data and the second data as shown in Figure 2. For example, the memory stores a table where the first data relate to source media devices (as shown in the left column of the table) of media content, and the second data relate to destination media devices for media content. In the present example, the operation relates to a transfer of media content from a specific source media device to a specific destination media device. For instance, the following operations are possible to express using the source/destination model: copying, streaming or removing the media content from the source to the destination, watching a TV program transmitted from a TV broadcaster to a TV set, recording a TV program transmitted from a TV broadcaster to a VCR recorder (Video Cassette Recorder), etc.

In the table shown in Figure 2, the following exemplary source media devices and functionalities are given: the DVD player, the HDD drive, the TV tuner, a set-top box (including a satellite receiver), the video camera, a memory unit of the photo camera, and a time shift buffer. In the column of the table, the following exemplary destination media devices and functionalities are given: the DVD player, the HDD drive, the TV tuner, an "erase mode" of a media device, and an "edit mode" of a media device.

The time shift buffer is a device, e.g., an HDD, for storing media content, e.g., of a currently viewed TV program. The stored TV program may be retrieved, watched again, transferred to the hard drive or simply recorded onto a DVD+R/RW disc. When recording onto the hard drive, the time shifting allows the user to time-shift and watch the program from an earlier point, while the recording continues uninterrupted. It is also possible to watch a program stored on the hard drive while another program is being recorded.

The table stores for each combination of a particular destination media device and a particular source media device, an operation corresponding to the particular combination of the source and destination media devices. In other words, the table specifies a command or a set of commands which is/are generated for the respective combination of the first and second items. In addition, the table indicates a representation of the respective first (second) item on the display. For example, graphical icons are stored for the sources/destinations in the table. Where an operation is not possible between a particular first and particular second item, it may also be indicated in the table. In some cases, the operation between a particular first and particular second item may not be available for the selection. For instance, an operation between the "erase mode" and the TV tuner may not be technically feasible.

The apparatus of the present invention may be incorporated into any of various consumer electronics devices such as a television set (TV set) with a cable, satellite or other link, a video cassette recorder (VCR), a home cinema system, a CD player, a remote control device such as an I-Pronto remote control, a cell phone, etc.

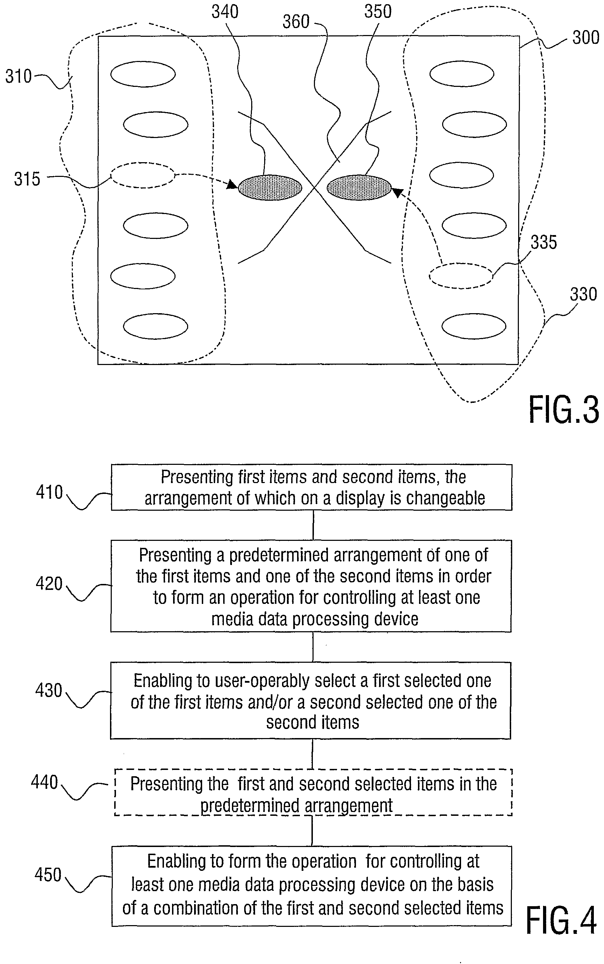

The apparatus as described in the preceding paragraphs may generate an exemplary user interface on a display 300 shown in Figure 3. The display 300 presents the first set of items 310 and the second set of items 330. Any of the first items 310 can be positioned in any manner on one side of the display 300, and any of the second items 330 on another side of the display 300. Alternatively, the first items 310 and second items 330 may be presented, for example, with different colours so that the user can distinguish between the first and second items. An indicator 360 indicates the predetermined arrangement comprising a first predetermined position 340 of a relevant one of the first items 310 and a second predetermined position 350 of a relevant one of the second items 330. The X-shape (or another form) indicator 360 points out on the display 300 the first and second positions 340 and 350 so that the user can easily see them. A first selectable item 315 is moved to the first position 340, and a second selectable item 335 is positioned in the second position 350.

Figure 4 shows an embodiment of the method of the present invention. In step 410, the first set of the first items and the second set of the second items are presented on the display. For example, the first set is presented in a first list of the first items, the second set is presented in a second list of the second items. The user may move the items within a relevant one of the lists with respect to each other so that an order of the items within the list changes. The user may also rotate the items in the list so that the items are shifted down/up and the last/first item moves to the first/last position in the list.

In an embodiment of the present invention, at least one of the first list and the second list has a curved form or circular form. If the first items (the second items) are arranged in a circle, the user may rotate the first items around a centre point of the circle, where the center point is a fixed point on the display.

Alternatively, the first and the second items are not ordered in any list or another type of sequential representation. For example, Figure 3 shows an example of non-ordered items which is not within the scope of the claims.

A difference between the ordered and non-ordered presentation of the items may be in a manner of the interaction of a user with the presented items in order to change the arrangement of the items. For example, in case of the list, a single button may suffice to change the arrangement of the items and select the desired item. In case of the non-ordered items, e.g., a pointing device may be required.

In step 420, the indicator for indicating the predetermined arrangement of the relevant one of the first items and the relevant one of the second items is presented on the display. The indicator is a way of pointing out to the user of a manner in which the relevant first item and the relevant second item should be arranged so that the operation is formed. When the relevant first and second items are in the predetermined arrangement, the apparatus knows that the user would like the operation to be formed on the basis of the unique combination of the relevant first and second items. The indicator may take any graphical form. An example of the indicator including elements 340, 350, 360 is shown in Figure 3.

The predetermined arrangement may comprise the first and the second predetermined positions 340 and 350. In another example, the predetermined arrangement may be a predetermined position of the relevant first and second item in the first and second list respectively.

In step 430, the apparatus according to the present invention enables the user to select a first selectable one of the first items and a second selectable one of the second items. The processor 110 of the apparatus provides the display 120 with video signals to enable the presentation of information, and the processor is configured to obtain user input signals from the user input means 130 to determine which one of the first items and/or the second items the user has selected. It should be noted that the processor may be remote from the display means and the user input means.

The selection of the first and/or second selectable items may be performed by changing the arrangement, e.g., the position, of the first or second items on the display 120 so that the first and second selectable items are moved to the predetermined arrangement.

In optional step 440, the selected first and second items are presented in the predetermined arrangement. This step may also be performed after the operation on the basis of the selected first and second items has been performed.

In one of the embodiments, the selected first and second items presented in the predetermined arrangement are positioned closer to each other than other pairs of the first and second items. With this close positioning, the user easily identifies which items on the display 120 are indicated to form the operation. Such presentation of the first and second selected items is user-intuitive.

In step 450, the forming of the operation on the basis of the first and second selected items is enabled. The processor 110 is configured to generate control signals on the basis of the user input signals obtained from the user input means 130. The control signals may be generated using the data stored in the memory 140, for example, as shown in the table in Figure 2. The data may include one or more instructions to be generated for the particular combination of the first and second selected items. The processor provides the relevant one(s) of media devices 181-187 with the control signals to effect the execution of the operation by the media devices 181-187. Other manners of forming the operation are possible. In any case, the forming of the operation is enabled by the processor 110 suitably configured to communicate with the display means 120, user input means 130 and the media devices 181-187.

The execution of the operation by the media devices 181-187, the generation of the commands corresponding to the operation and the transfer of the media content related to the operation is described in US2003/0107605.

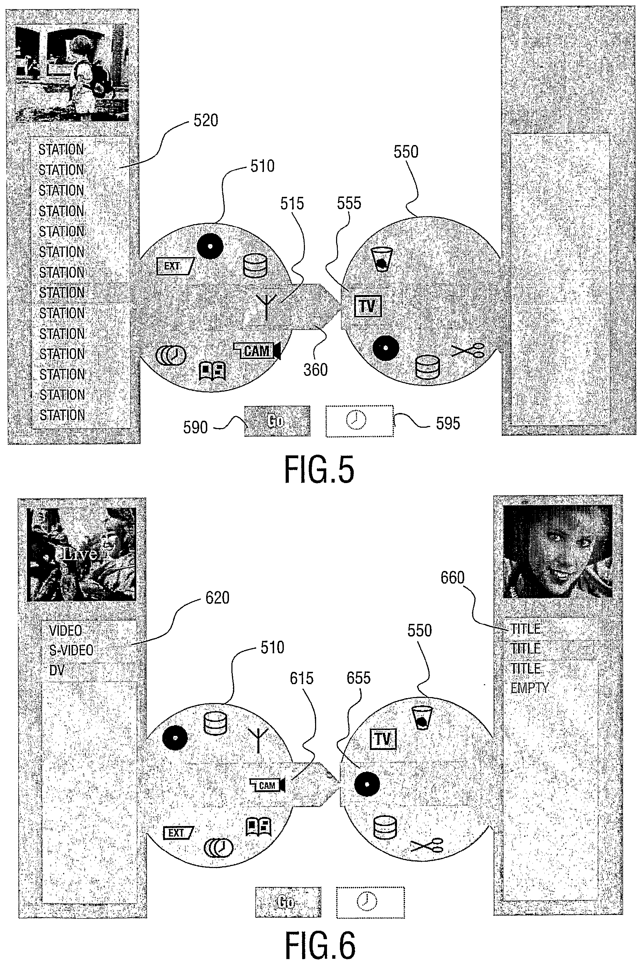

Figure 5 is an embodiment of the user interface presentation according to the present invention. The first set of the first items is presented in a first circle 510, and the second set of the second items is in a second circle 550. The first items are arranged in the first circle that can be rotated, and the second items may be rotated in the second circle. Thus, the positions of the items in the first and second circles 510 and 550 are rotatable like two carrousels of the items. At a point where the first and second circle are the closest to each other so that the distance between then is the shortest, a corresponding first item in the first circle and a corresponding second item in the second circle are indicated as positioned in the predetermined arrangement, e.g., by highlighting the corresponding first and second items. The highlighted first and second items are the first and second selected items on the basis of which the operation may be formed.

By rotating the first and/or the second circle 510 and/or 550, various pairs of the first and second items may be obtained. The two circles form an efficient representation of all attainable operations.

In the example shown in Figure 5, a TV tuner icon 515 is selected as a source of media content, and a TV display icon 555 as a destination of media content. The first circle 510 represents all possible sources of media content, and the second circle 550 represents possible destinations of media content. In a first panel corresponding to the first circle, a TV channel menu 520 associated with the selected first item is presented. The TV channel menu comprises one or more of TV channels available to the TV tuner. Once the TV tuner icon 515 has been selected, the user may select a particular TV channel from the TV channel menu 520.

After the selection of the source and the destination has been completed, a respective operation is formed, e.g., delivering TV video signals comprising data of the chosen TV channel to the TV display corresponding to the icon 555. This example of the TV tuner and the TV display is an example of presenting typical operations performed by the conventional television set in accordance with the present inventive concept. Of course, the TV tuner and the TV display may be comprised in the same television set.

A graphical element, e.g., a button "Start now" 590 ("Go") or "Start later" ("Timer") 595, may be provided to indicate when the user would like the operation to be started.

It should be noted that an automatic selection of the source or the destination is also possible. For example, if the user decides to pause the display of the media content item, e.g., a TV program, the time-shift buffer icon may be automatically selected in combination with the TV display and presented in the predetermined arrangement together with the TV display icon.

Figure 6 is another embodiment of a user interface presentation according to the present invention. A "Video camera" icon 615 is selected as a source of media content from the first circle 510, and a "DVD recorder" icon 655 is selected as a destination of media content from the second circle 550. A video input menu 620 of the video camera is presented to enable the user to select, e.g., a DV (Digital Video) input from other options. A disk menu 660 is presented upon the selection of the "DVD recorder" icon 655. The disk menu shows titles of media content items stored on a DVD disk. The user can choose the media content item where the media content from the video camera is to be recorded.

The processor 110 retrieves from the memory 140 the operation corresponding to the combination of the first and second selected items. In the example in Figure 6, the operation may, e.g., be "Archive camera recording" by partially overwriting DVD contents.

According to an embodiment of the present invention, the first set of the first items or the second set of the second items may be associated with respective media content items or operations (functions, e.g., an operation of recording a TV program as a media content item) with the media content items performable by the at least one media device respectively. For example, the media device, the media content item and the operation with the media content item may be comprised in the set of items. Alternatively, the first set may comprise only the media devices, and the second set only the media content items. Other variations are possible.

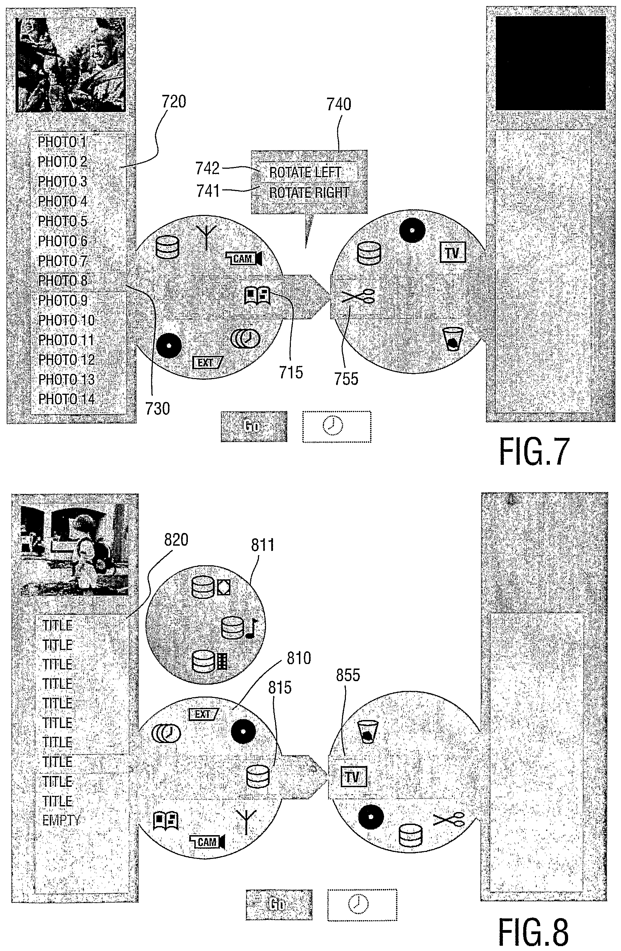

Figure 7 shows an embodiment of the present invention. The first circle of the first items and the second circle of the second items are the same as in Figure 6. However, the first selected item is a "photo album" icon 715, and an "edit" function icon 755 is selected from the second list. An operation with a photo 730 of the photo album stored in a photo camera may correspond to this combination of the first and second selected items. The photo may be selected from a photo album menu 720.

An additional sub-operation menu 740 may be presented to the user upon the selection of the combination of the photo album icon 715 and the edit mode icon 755. The presentation of the sub-operation menu 740 may be triggered by the processor 110 after, for example, the processor 110 reads out of the memory 140 that the respective combination the sub-operations are available. The user may select the sub-operation from the sub-operation menu 740, and the processor will send the corresponding control signals to the photo camera. For instance, the user may select between the sub-operations "Rotate left" 741 and "Rotate right" 742.

Figure 8 shows an embodiment of the present invention, where a "storage means" icon 815 is selected to represent a source of media content, and a TV display icon 855 to represent a destination of media content. Once the user has selected the storage means icon from the first circle (first list) 810, another sub-circle (a sub-list) 811 may be presented after the processor 110 reads out from the memory 140 that, for the first item 815, a sub-list of first sub-items is available. For instance, the sub-list 811 may comprise the first sub-items associated with genres of media content, e.g., audio content, movies or photos, stored at the storage means having the icon 815. After the user has selected one of the first sub-items 811, a storage means menu 820 may be presented where media content items of the genre selected from the sub-list 811 are shown. When one of the media content items in the storage means menu 820 has been selected, the operation of showing that item on the TV display may be formed.

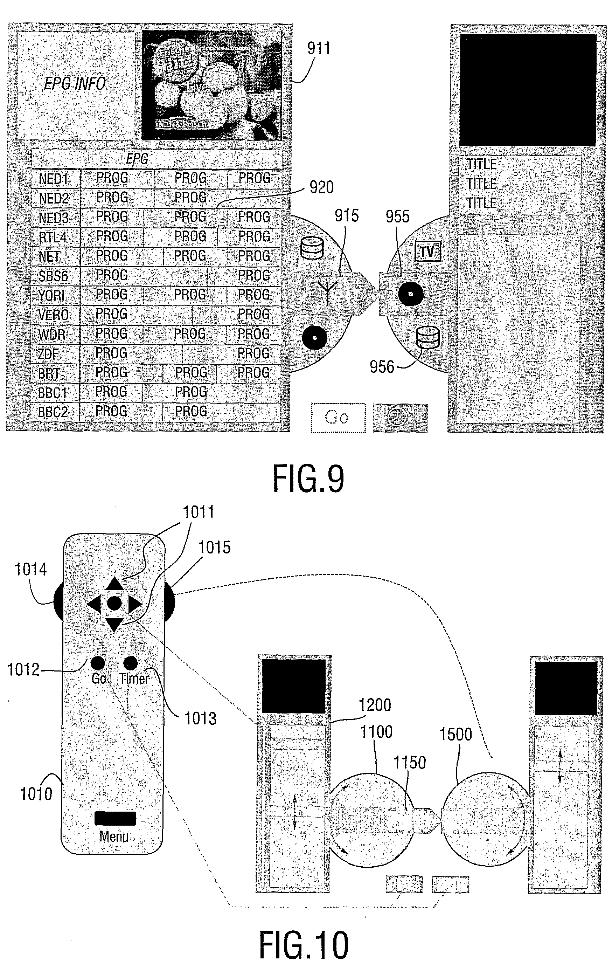

Figure 9 is an embodiment of a user interface presentation according to the present invention, where a TV tuner icon 915 is selected to represent a source of media content and a DVD recorder icon 955 to represent a destination of media content.

The memory 140 may store, for the TV tuner, EPG (Electronic Program Guide) data and a computer program for generating an EPG user interface 911. The processor 110 may read the EPG data and execute the computer program to present the EPG user interface on the display.

A frame 911 shows a plurality of TV programs in a grid with a channel axis 912 and an optional time axis (not shown). For instance, the grid may be scrolled vertically and horizontally for viewing the program information for another time period and/or channels. A TV program 920 receivable by the TV tuner may be selected at the frame 911.

For example, if the user would like to record the selected program 920, the user selects the DVD recorder icon 955. As an alternative example, the user might select the storage means icon 956 to store the selected program 920.

Figure 10 is a functional block diagram of an embodiment of the present invention, where the selection of the items is performed by the user using a remote control unit 1010.

The remote control unit 1010 comprises, for example, up/down buttons 1011 for selecting options, media content items, etc., from a menu 1200. The menu 1200 may be dependent on the first selected item 1150 selected from the first circle 1100.

The remote control unit 1010 may also comprise a hardware button "Start now" 1012 (associated with the "Go" button 590 in Figure 5) to initiate the immediate execution of the operation, and a button "Start later" 1013 (associated with the "Timer" button 595 in Figure 5) to postpone the execution of the operation and to set the time for the operation to be executed.

The remote control unit 1010 may further comprise two hardware (scrollable) wheels 1014 and 1015. The first wheel 1014 may be associated with the first carrousel 1100. The second wheel 1015 may be associated with the second carrousel 1500. The user may use the first wheel to rotate the first carrousel and the second wheel to rotate the second carrousel. The circle representation of the first list 1100 and the second list 1500 is similar to the form of the wheels 1014 and 1015. Therefore, the control of the carrousels 1100 and 1500 is user-intuitive and ergonomic.

The remote control unit 1010 may further comprise first buttons (not shown) associated with the first items and second buttons (not shown) associated with the second items. Upon an actuation of a particular one of these buttons, the item corresponding to the particular button may be presented in the predetermined arrangement. For example, when a TV display button on the remote control unit is pressed, the first circle 1100 is rotated and the TV display icon is displayed in the position 1150. Thus, the TV display icon is automatically shown in the predetermined position upon the pressing of the TV display button on the remote control unit.

Upon the pressing of the hardware button (not shown) or moving one of the wheels 1014 and 1015, the remote control unit may generate, for example, an infrared signal which is transmitted to the processor 110. The processor controls the presentation on the display means 120 in accordance with the signal obtained from the remote control unit 1010.

According to one of the embodiments of the present invention, multiple operations in parallel are supported. After starting an operation the user can in principle turn the carrousels and start another one. Status of ongoing operations is presented in 'status boxes' (not shown), where the number of status boxes is an indication of how many operations run in parallel (fixed or changing dynamically). This can go on as long as there are no technical limitations, and selected resources and destinations are available.

If the user wants to see a complete status of a certain operation that is running (e.g., the operation has a title, progress indication, etc.) or wants to stop such an operation (i.e., the user wants to have a 'stop' button), the user may put the circles presented on the display means 120 in the positions that belong to that operation. The number of operations that is allowed to run in parallel can be fixed, but could also change dynamically. In both cases the allowed number of operations may be indicated to the user by the amount of 'status boxes' that is displayed.

It should be noted that not to all combinations of the first and second items operations may be assigned. For example, the operation may be not possible if:
- it is technically not possible, e.g., due to bandwidth limitations;
- no resources are available, e.g., an internal TV tuner cannot be used to make simultaneous tuner recordings;
- the destination is not valid, e.g., no disk is present in the DVD recorder, etc.

In an embodiment of the present invention, the items in the first or second list are sorted in accordance with a user-specified criterion, e.g., in an alphabetical order.

In a further embodiment, the set of the first items is modified and one or more first items are added or removed from the set. The processor 110 may be arranged to store in the memory 140 a user profile (not shown) for indicating user preferences with respect to the first and/or second items. The user profile may be applied to the first set or the second set. The item is removed from the first or second set if the item is not in conformance with the user profile or rated with a low rating on the basis of the user profile. In a simple example, the user profile (a selection frequency profile) may store only items that have been selected by the user at least once in a predetermined time period, e.g., a week. If an item has not been selected with the time period, the item is removed from the user profile. If the item is not in the user profile, then the item is also removed from the respective set of the items. Thus, if the user does not select an item frequently enough (depending on the predetermined time period), the item is not going to be presented on the display.

In an embodiment of the present invention, the source or destination icons automatically appear/disappear from the display when related functionality becomes available/unavailable (e.g. when the media device (remote equipment) is switched on/off, etc.). In a further embodiment, the source or destination icons become 'disabled' (the disabling is indicated on the display, for example, by dimming the icons) when related functionality is not technically possible (e.g. if archiving to a disc is selected while the disc is non-recordable, the disc icon is presented on the display with a special colour to highlight the disc icon among other icons presented on the display).

In another embodiment, the remote control unit may have a button for switching between a normal mode of the carrousels, and an advanced mode of the carrousels. For example, the number of first items in the first list is larger in the advanced mode than in the normal mode because in the advanced mode additional items are presented that the user does not frequently use. Instead of the remote control unit, another device, e.g., a portable computer (personal digital assistant) or other devices equivalent to the remote control unit may be used.

In an embodiment of the present invention, at least one first (or second item) is associated with at least one user. In other words, there may be one or a plurality of users, each user being associated with a respective first (or second) item. The users are preferably associated with destinations of the media content because, typically, the users merely use the media content. At least user icon may be presented on the display means. If a particular source icon is selected for a specific user, an operation of rendering media content from the source to the specific user may be generated.

The technical means for determining a location of the specific user may be realized, for example, with a plurality of detectors for detecting the presence of the user in the location. Such detectors are well known. After the user location is determined, a rendering device for delivering the media content from the source to the user may be identified, e.g., on the basis of information (a database) about availability of rendering devices in the detected user location. Then, the media content is streamed from the source to the identified rendering device for presenting the media content to the specific user.

The user interface according to the present invention may be a single-screen user interface. The elements of the interface fit nicely and logically within one screen. Pressing a dedicated button on the remote control unit (e.g. 'Guide') may every time bring the user to an environment that is familiar to the user.

Various computer program products may implement the functions of the device and method of the present invention and may be combined in several ways with the hardware or located in different other devices.

Variations and modifications of the described embodiment are possible within the scope of the inventive concept, as defined in the appended claims.

The processor may execute a software program to enable the execution of the steps of the method of the present invention. The software may enable the apparatus of the present invention independently of where it is being run. To enable the apparatus, the processor may transmit the software program to the other devices, for example. The independent method claim and the computer program product claim may be used to protect the invention when the software is manufactured or exploited for running on the consumer electronics products.

The use of the verb 'to comprise' and its conjugations does not exclude the presence of
further elements or steps,
in addition to those defined in a claim. The invention can be implemented by means of hardware comprising several distinct elements, and by means of a suitably programmed computer. In the system claim enumerating several means, several of these means can be embodied by one and the same item of hardware.

## Claims

1. A method of enabling to control a plurality of media data processing devices (181-187), the method comprising the steps of:
- presenting (410) on a display (120) a first list of first items (510) associated with source media data processing devices of the plurality of media data processing devices and a second list of second items (550) associated with destination media data processing devices of the plurality of media data processing devices, wherein an arrangement of the first and second items on the display is changeable, the arrangement being a position of one of the first items in the first list and one of the second items in the second list,
- presenting (420) on the display an indicator (360) for indicating a predetermined arrangement of a particular one (515) of the first items in the first list and a particular one (555) of the second items in the second list, in which predetermined arrangement an operation relating to a media content transfer between a particular one of the source media data processing devices and a particular one of the destination media data processing devices is executable on the basis of a combination of the particular one of the first items and the particular one of the second items, the predetermined arrangement being a predetermined position of the particular one of the first items in the first list and the particular one of the second items in the second list,
- obtaining (430) user input signals from user input means (130) to select the particular one (515) of the first items in the first list and the particular one (555) of the second items in the second list by positioning them in the predetermined arrangement,
- presenting (440) the selected particular first and second items in the predetermined arrangement, and
- enabling (450) execution of the operation by a source media data processing device and a destination media data processing device of the plurality of media data processing devices on the basis of the selected particular first and second items.

2. The method of claim 1, wherein, when the selected first and second items are presented in the predetermined arrangement, a distance between them is shorter than to the other first and second items.

3. The method of claim 1, wherein the first or second list has a curved or circular presentation.

4. The method of claim 3, wherein the position of the first items in the first list or the position of the second items in the second list is changeable by rotating the first list or the second list relative to a fixed point on the display.

5. The method of claim 1, wherein the selection of the selected first and/or second items comprises obtaining a respective command generated by a remote control unit (1010).

6. The method of claim 1, further comprising a step of adding at least one first or second item to the first or second list, respectively, or a step of removing at least one first or second item from the first or second list, respectively.

7. The method of claim 6, wherein the adding or removing is automatically performed on the basis of a user profile indicating user preferences with respect to the first and/or second items, or on the basis of a selection history profile indicating a frequency of selecting at least one of the first or second items by a user.

8. An apparatus for enabling to control a plurality of media data processing devices (181-187), the apparatus comprising display means (120), user input means (130) and a processor (110) configured to:
- present on the display means a first list of first items (510) associated with source media data processing devices of the plurality of media data processing devices and a second list of second items (550) associated with destination media data processing devices of the plurality of media data processing devices, wherein an arrangement of the first and second items on the display means is changeable, the arrangement being a position of one of the first items in the first list and one of the second items in the second list,
- present on the display means an indicator (360) for indicating a predetermined arrangement of a particular one (515) of the first items of the first list and a particular one (555) of the second items of the second list, in which predetermined arrangement an operation relating to a media content transfer between a particular one of the source media data processing devices and a particular one of the destination media data processing devices is executable on the basis of a combination of the particular one of the first items and the particular one of the second items, the predetermined arrangement being a predetermined position of the particular one of the first items in the first list and the particular one of the second items in the second list,
- obtain user input signals from user input means (130) to select the particular one (515) of the first items of the first list and the particular one (555) of the second items of the second list by positioning them in the predetermined arrangement,
- present the selected particular first and second items in the predetermined arrangement, and
- enable execution of the operation by a source media data processing device and a destination media data processing device of the plurality of media data processing devices on the basis of the selected particular first and second items.

9. A computer program product enabling a programmable device when executing said computer program product to function as the apparatus as defined in claim 8.

## Patentansprüche

1. Verfahren zum Aktivieren der Steuerung einer Vielzahl von Mediendaten-Verarbeitungsvorrichtungen (181-187), wobei das Verfahren die folgenden Schritte umfasst:
- Präsentieren (410), auf einer Anzeige (120), einer ersten Liste von ersten Elementen (510), die Quellmediendaten-Verarbeitungsvorrichtungen der Vielzahl von Mediendaten-Verarbeitungsvorrichtungen zugeordnet sind, und einer zweiten Liste von zweiten Elementen (550), die den Zielmediendaten-Verarbeitungsvorrichtungen der Vielzahl von Mediendaten-Verarbeitungsvorrichtungen zugeordnet sind, wobei eine Anordnung der ersten und zweiten Elemente auf der Anzeige veränderbar ist, wobei die Anordnung eine Position eines der ersten Elemente in der ersten Liste und eines der zweiten Elemente in der zweiten Liste ist,
- Präsentieren (420), auf der Anzeige, eines Indikators (360) zum Angeben einer vorbestimmten Anordnung eines bestimmten (515) der ersten Elemente in der ersten Liste und eines bestimmten (555) der zweiten Elemente in der zweiten Liste, wobei die vorbestimmte Anordnung eine Operation ist, die sich auf den Medieninhalttransfer bezieht, zwischen einer bestimmten der Quellmediendaten-Verarbeitungsvorrichtungen und einer bestimmten der Zielmediendaten-Verarbeitungsvorrichtungen auf der Basis einer Kombination des bestimmten der ersten Elemente und des bestimmten der zweiten Elemente ausführbar ist, wobei die vorbestimmte Anordnung eine vorbestimmte Position des bestimmten der ersten Elemente in der ersten Liste und dem bestimmten der zweiten Elemente in der zweiten Liste ist,
- Erhalten (430) von Benutzereingabesignalen von Benutzereingabemitteln (130), um das bestimmte (515) der ersten Elemente in der ersten Liste und das bestimmte (555) der zweiten Elemente in der zweiten Liste durch Positionieren davon in der vorbestimmten Anordnung auszuwählen,
- Präsentieren (440) der ausgewählten bestimmten ersten und zweiten Elemente in der vorbestimmten Anordnung, und
- Aktivieren (450) der Ausführung des Betriebs durch eine Quellmediendaten-Verarbeitungsvorrichtung und eine Zielmediendaten-Verarbeitungsvorrichtung der Vielzahl von Mediendaten-Verarbeitungsvorrichtungen basierend auf den ausgewählten bestimmten ersten und zweiten Elementen.

2. Verfahren nach Anspruch 1, wobei, wenn die ausgewählten ersten und zweiten Elemente in der vorbestimmten Anordnung präsentiert werden, ein Abstand dazwischen kürzer als zwischen den anderen ersten und zweiten Elementen ist.

3. Verfahren nach Anspruch 1, wobei die erste oder zweite Liste eine gekrümmte oder kreisförmige Präsentation aufweist.

4. Verfahren nach Anspruch 3, wobei die Position der ersten Elemente in der ersten Liste oder die Position der zweiten Elemente in der zweiten Liste durch Drehen der ersten Liste oder der zweiten Liste in Bezug auf einen festen Punkt auf der Anzeige geändert werden kann.

5. Verfahren nach Anspruch 1, wobei die Auswahl der ausgewählten ersten und/oder zweiten Elemente das Erhalten eines jeweiligen Befehls umfasst, der durch eine Fernbedienungseinheit (1010) erzeugt wird.

6. Verfahren nach Anspruch 1, ferner umfassend einen Schritt des Hinzufügens von mindestens einem ersten oder zweiten Element zu der ersten bzw. zweiten Liste oder einen Schritt des Entfernens von mindestens einem ersten oder zweiten Element aus der ersten bzw. zweiten Liste.

7. Verfahren nach Anspruch 6, wobei das Hinzufügen oder Entfernen automatisch basierend auf einem Benutzerprofil durchgeführt wird, das Benutzerpräferenzen in Bezug auf das erste und/oder zweite Element angibt, oder basierend auf einem Auswahl-Verlaufsprofil, das eine Häufigkeit der Auswahl mindestens eines der ersten oder zweiten Elemente durch einen Benutzer angibt.

8. Vorrichtung zum Aktivieren der Steuerung einer Vielzahl von Mediendaten-Verarbeitungsvorrichtungen (181-187), wobei die Vorrichtung Anzeigemittel (120), Benutzereingabemittel (130) und einen Prozessor (110) umfasst, der konfiguriert ist zum:
- Präsentieren, auf dem Anzeigemittel, einer ersten Liste von ersten Elementen (510), die Quellmediendaten-Verarbeitungsvorrichtungen der Vielzahl von Mediendaten-Verarbeitungsvorrichtungen zugeordnet sind, und einer zweiten Liste von zweiten Elementen (550), die den Zielmediendaten-Verarbeitungsvorrichtungen der Vielzahl von Mediendaten-Verarbeitungsvorrichtungen zugeordnet sind, wobei eine Anordnung der ersten und zweiten Elemente auf dem Anzeigemittel veränderbar ist, wobei die Anordnung eine Position eines der ersten Elemente in der ersten Liste und eines der zweiten Elemente in der zweiten Liste ist,
- Präsentieren, auf dem Anzeigemittel, eines Indikators (360) zum Angeben einer vorbestimmten Anordnung eines bestimmten (515) der ersten Elemente in der ersten Liste und eines bestimmten (555) der zweiten Elemente in der zweiten Liste, wobei die vorbestimmte Anordnung eine Operation ist, die sich auf den Medieninhalttransfer bezieht, zwischen einer bestimmten der Quellmediendaten-Verarbeitungsvorrichtungen und einer bestimmten der Zielmediendaten-Verarbeitungsvorrichtungen auf der Basis einer Kombination des bestimmten der ersten Elemente und des bestimmten der zweiten Elemente ausführbar ist, wobei die vorbestimmte Anordnung eine vorbestimmte Position des bestimmten der ersten Elemente in der ersten Liste und des bestimmten der zweiten Elemente in der zweiten Liste ist,
- Erhalten von Benutzereingabesignalen von Benutzereingabemitteln (130), um das bestimmte (515) der ersten Elemente in der ersten Liste und das bestimmte (555) der zweiten Elemente in der zweiten Liste durch Positionieren davon in der vorbestimmten Anordnung auszuwählen, und Präsentieren der ausgewählten bestimmten ersten und zweiten Elemente in der vorbestimmten Anordnung, und
- Aktivieren der Ausführung des Betriebs durch eine Quellmediendaten-Verarbeitungsvorrichtung und eine Zielmediendaten-Verarbeitungsvorrichtung der Vielzahl von Mediendaten-Verarbeitungsvorrichtungen basierend auf den ausgewählten bestimmten ersten und zweiten Elementen.

9. Computerprogrammprodukt, das es einer programmierbaren Vorrichtung ermöglicht, wenn das Computerprogrammprodukt ausgeführt wird, als das in Anspruch 8 definierte Gerät zu funktionieren.

## Revendications

1. Procédé permettant de commander une pluralité de dispositifs de traitement de données multimédia (181-187), le procédé comprenant les étapes consistant à :
- présenter (410) sur un appareil d'affichage (120) une première liste de premiers articles (510) associés à des dispositifs de traitement de données multimédia de source de la pluralité de dispositifs de traitement de données multimédia et une seconde liste de seconds articles (550) associés à des dispositifs de traitement de données multimédia de destination de la pluralité de dispositifs de traitement de données multimédia, l'agencement étant une position de l'un des premiers articles de la première liste et d'un des seconds articles de la seconde liste,
- présenter (420) sur l'appareil d'affichage un indicateur (360) pour indiquer un agencement prédéterminé de l'un particulier (515) des premiers articles de la première liste et de l'un particulier (555) des seconds articles de la seconde liste, dans lequel agencement prédéterminé une opération se rapportant à un transfert de contenu multimédia entre l'un particulier des dispositifs de traitement de données multimédia de source et de l'un particulier des dispositifs de traitement de données multimédia de destination est exécutable sur la base d'une combinaison de l'un particulier des premiers articles et de l'un particulier des seconds articles, l'agencement prédéterminé étant une position prédéterminée de l'un particulier des premiers articles et de l'un particulier des seconds articles, l'agencement prédéterminé étant une position prédéterminée de l'un particulier des premiers articles de la première liste et de l'un particulier des seconds articles de la seconde liste,
- obtenir (430) des signaux d'entrée utilisateur de moyens d'entrée utilisateur (130) pour sélectionner l'un particulier (515) des premiers articles de la première liste et l'un particulier (555) des seconds articles de la seconde liste en les positionnant dans l'agencement prédéterminé,
- présenter (440) les premiers et seconds articles particuliers sélectionnés dans l'agencement prédéterminé et
- permettre (450) l'exécution de l'opération par un dispositif de traitement de données multimédia de source et un dispositif de traitement de données multimédia de destination de la pluralité de dispositifs de traitement de données multimédia sur la base des premiers et seconds articles particuliers sélectionnés.

2. Procédé selon la revendication 1, dans lequel, lorsque les premiers et seconds articles sélectionnés sont présentés dans l'agencement prédéterminé, une distance entre eux est plus courte que pour les autres premiers et seconds articles.

3. Procédé selon la revendication 1, dans lequel la première ou la seconde liste a une présentation incurvée ou circulaire.

4. Procédé selon la revendication 3, dans lequel la position des premiers articles de la première liste ou la position des seconds articles de la seconde liste peut être modifiée en faisant tourner la première liste ou la seconde liste par rapport à un point fixe sur l'appareil d'affichage.

5. Procédé selon la revendication 1, dans lequel la sélection des premiers et/ou seconds articles sélectionnés comprend une instruction respective générée par une unité de télécommande (1010).

6. Procédé selon la revendication 1, comprenant en outre une étape d'addition d'au moins un premier ou un second article à la première ou la seconde liste, respectivement, ou une étape de retrait d'au moins un premier ou un second article de la première ou de la seconde liste, respectivement.

7. Procédé selon la revendication 6, dans lequel l'addition ou le retrait est automatiquement effectué(e) sur la base d'un profil utilisateur indiquant des préférences utilisateur par rapport aux premiers et/ou aux seconds articles ou sur la base d'un profil d'historique de sélection indiquant une fréquence de sélection d'au moins l'un des premiers ou seconds articles par un utilisateur.

8. Appareil permettant de commander une pluralité de dispositifs de traitement de données multimédia (181-187), l'appareil comprenant des moyens d'affichage (120), des moyens d'entrée utilisateur (130) et un processeur (110) configurés pour :
- présenter sur les moyens d'affichage une première liste de premiers articles (510) associés à des dispositifs de traitement de données multimédia de source de la pluralité de dispositifs de traitement de données multimédia et une seconde liste de seconds articles (550) associés à des dispositifs de traitement de données multimédia de destination de la pluralité de dispositifs de traitement de données multimédia, dans lequel un agencement des premiers et seconds articles sur les moyens d'affichage est modifiable, l'agencement étant une position de l'un des premiers articles de la première liste et d'un des seconds articles de la seconde liste,
- présenter sur les moyens d'affichage un indicateur (360) pour indiquer un agencement prédéterminé de l'un particulier (515) des premiers articles de la première liste et de l'un particulier (555) des seconds articles de la seconde liste, dans lequel agencement prédéterminé une opération se rapportant à un transfert de contenu multimédia entre l'un particulier des dispositifs de traitement de données multimédia de source et de l'un particulier des dispositifs de traitement de données multimédia de destination est exécutable sur la base d'une combinaison de l'un particulier des premiers articles et de l'un particulier des seconds articles, l'agencement prédéterminé étant une position prédéterminée de l'un particulier des premiers articles et de l'un particulier des seconds articles, l'agencement prédéterminé étant une position prédéterminée de l'un particulier des premiers articles de la première liste et de l'un particulier des seconds articles de la seconde liste,
- obtenir des signaux d'entrée utilisateur de moyens d'entrée utilisateur (130) pour sélectionner l'un particulier (515) des premiers articles de la première liste et l'un particulier (555) des seconds articles de la seconde liste en les positionnant dans l'agencement prédéterminé,
- présenter les premiers et seconds articles particuliers sélectionnés dans l'agencement prédéterminé et
- permettre l'exécution de l'opération par un dispositif de traitement de données multimédia de source et un dispositif de traitement de données multimédia de destination de la pluralité de dispositifs de traitement de données multimédia sur la base des premiers et seconds articles particuliers sélectionnés.

9. Produit de programme informatique permettant à un dispositif programmable, lorsqu'il exécute ledit produit de programme informatique, de fonctionner comme l'appareil tel que défini dans la revendication 8.
